# EUROPEAN PATENT SPECIFICATION

(11) **EP 3 296 074 B1**
(45) Date of publication and mention of the grant of the patent: **03.07.2019**
(21) Application number: 16795793.5
(22) Date of filing: 04.05.2016
(51) Int. Cl.: B28B 23/00, B28B 1/40, B29B 15/12

(54) **LIGHT-TRANSMITTING CONCRETE MANUFACTURING PROCESS BASED ON WRAPPING OPTICAL FIBRE WITH PASTE**
VERFAHREN ZUR HERSTELLUNG VON LICHTDURCHLÄSSIGEM BETON AUF BASIS DER UMWICKLUNG EINER OPTISCHEN FASER MIT PASTE
PROCÉDÉ DE FABRICATION DE BÉTON À TRANSMISSION DE LUMIÈRE FONDÉ SUR L'ENVELOPPEMENT DE FIBRE OPTIQUE AVEC UNE PÂTE

(30) Priority: 15.05.2015 CN 201510252516
(43) Date of publication of application: 21.03.2018
(73) Proprietor: China State Construction Ready Mixed Concrete Co., Ltd., Wuhan, Hubei 430074 (CN)
(72) Inventor: LIU, Li, Wuhan Hubei 430074 (CN); YANG, Wen, Wuhan Hubei 430074 (CN); WU, Yuanyuan, Wuhan Hubei 430074 (CN)
(74) Representative: Laufhütte, Dieter
(86) International application number: PCT/CN2016/081002
(87) International publication number: WO 2016/184306

(56) References cited:
- CN-A- 101 906 836
- CN-A- 102 166 779
- CN-A- 102 166 780
- CN-A- 102 189 590
- CN-A- 102 848 451
- CN-A- 103 085 154
- CN-A- 103 753 690
- CN-A- 104 827 565
- DE-A1-102007 045 898
- JP-A- 2006 224 349
- US-A1- 2011 185 660
- US-A1- 2014 068 916

## Description

### Field of the Invention

The present disclosure relates to the technical field of translucent concrete manufacturing, and particularly to a method for manufacturing a translucent concrete based on optical fiber wrapped with cement slurry and manufacturing equipment thereof.

### Background of the Invention

Concrete is one of the building materials with large using amount in modern buildings. Traditional concrete usually shows a dark gray color. However, as people expect more architectural beauty and with the development of technology, concrete is not only used as building material nowadays, but also used to create various works of art by artists and architects. In 2001, a Hungarian architect invented translucent concrete by burying thousands of optical fibers side by side in traditional concrete. Light can be transmitted from one end of the concrete block to the other end thereof by the optical fibers. When this kind of concrete is placed before a light source, or when one side of the concrete is brighter, while the other side thereof is darker, the concrete block is translucent, and a shadow of the brighter side will appear as a clear silhouette on the darker side. The translucent concrete can be made into garden construction products, decorative sheets, decorative blocks, and products with waved surface, which provides possibility for realization of artistic imagination and creation of the architects.

The translucent concrete is essentially a composite material comprising a cement slurry and optical fibers that are embedded in the cement slurry and arranged in an array. The core technology and difficulty in producing the translucent concrete lies in how to realize array arrangement of thousands of optical fibers in the concrete, that is, how to enable the optical fibers to disperse with a certain distance thereamong.

There are researches in China about the technology of translucent concrete and array dispersion and arrangement of optical fibers therein. Chinese patents 200710007521.X, 201210070586.X, 201210070575.1 each provide a method for manufacturing a translucent concrete block. However, according to these methods, optical fibers need to be placed into holes in the concrete for fixing the optical fibers one by one manually, which involves a huge workload, and the operation thereof is slow. In addition, these methods are only applicable for producing prefabricated translucent concrete blocks, and have a poor prospect for large-scale promotion and application. Chinese patent 201210266298.1 provides a method for manufacturing a translucent concrete. According to this method, a plurality of optical fibers can be arranged at one time, and the workload of optical fibers arrangement can be reduced. However, according to this method, the optical fibers are dispersed by electrostatic charge, and the optical fibers are dispersed in a scattered manner in a round region. As a result, distances among the optical fibers are hard to control; an array effect is lost; and optical fiber densities at intersecting regions of different optical fiber bundles are hard to control. The above methods are feasible to a certain degree. These methods are all based on a thought of "dispersing two ends of the optical fibers first, and then pouring cement slurry into interspaces among the optical fibers," which can be called as "transparent material pre-placing method."

Chinese patent 201110331500.X provides a new method for manufacturing a translucent concrete, i.e., "perforating in a half hardened concrete, and pouring transparent resin material into the holes," so that the resin and the half hardened concrete are hardened together to form translucent concrete. The method belongs to "transparent material post-placing method." According to this method, the difficulty of optical fiber arrangement can be avoided to some extent, but there is another problem, i.e., it is difficult to perforate densely in a concrete with a large thickness. More importantly, resin and concrete are two different materials, and there is a difference between shrinkage rates thereof during hardening procedure. If a shrinkage rate of resin is smaller than that of concrete, it would possibly result in cracking or even disintegration of the translucent concrete; and if the shrinkage rate of resin is larger than that of concrete, it would possibly result in a gap between the resin and the concrete, which will affect light conductivity of resin and reduce compactness of the translucent concrete.

US 2011/0185660 A1 discloses a method for manufacturing translucent building elements, where a fiber composite is first coated with a castable matrix and then conveyed to a formwork, in which the coated fiber composite is placed layer wise.

In a word, there are problems of complicated operation, huge workload, and poor interoperability between transparent material and cement slurry matrix in manufacturing methods of translucent concrete in the prior art.

### Summary of the Invention

The present disclosure aims to provide a method for manufacturing a translucent concrete, whereby array arrangement of optical fiber in the translucent concrete can be realized in a simple and effective manner, and row distance as well as column distance of the array can be adjusted freely according to actual needs. The method can be used in production of prefabricated translucent concrete blocks with various sizes and in construction of cast-in-situ translucent concrete.

In order to achieve the above purpose, the present disclosure provides a method for manufacturing a translucent concrete based on optical fiber wrapped with cement slurry. The method comprises steps of:
step (1): wrapping an optical fiber with a cement slurry, which comprises passing a straight optical fiber through the cement slurry so that the cement slurry adheres to a surface of the optical fiber;
step (2): removing extra cement slurry and performing shape-forming, which comprises passing the optical fiber wrapped with the cement slurry through a shape-forming funnel to remove extra cement slurry, and then sending the optical fiber to a fast maintenance area;
step (3): cutting optical fiber bars, which comprises cutting the optical fiber into a plurality of optical fiber bars with an equal length after the cement slurry wrapping the optical fiber hardens;
step (4): arranging the optical fiber bars, which comprises aligning two ends of the optical fiber bars, and bundling the optical fiber bars up or putting the optical fiber bars regularly and closely in a mould;
step (5): pouring translucent concrete, which comprises pouring a cement slurry into interspaces among the optical fiber bars; and
step (6): polishing the concrete, which comprises polishing two ends of the concrete along a direction of the optical fiber bars after the cement slurry hardens, so that two ends of each optical fiber bar are exposed, and the translucent concrete is obtained.

According to the method, a viscosity of the cement slurry is in a range from 10 cPa to 60 cPa. The cement slurry adheres to the surface of the optical fiber and does not flow or drop.

According to the method, the optical fiber is made of glass or resin.

According to the method, a temperature of the fast maintenance area is in a range from 60°C to 80°C, and a humidity thereof is in a range from 80% to 90%.

According to the method, the cement slurry used in step (5) has same components as the cement slurry used in step (1), wherein the cement slurry comprises a cement, water, a thickener, and a quicksetting agent in a mass ratio of 1: 0.3-0.6: 0.0003-0.001: 0.005-0.02.

The following beneficial effects can be brought about by the present disclosure.

Compared with the prior art, the present disclosure has the following advantages. The optical fiber bars are arranged in a close manner rather than in a scattered manner, which reduces workload and work strength. The optical fiber bars are arranged in a close manner as an ordered array, and the row distance as well as column distance of the optical fiber array can be adjusted through adjusting a thickness of the cement slurry wrapping the optical fiber. The optical fiber bars can be arranged in a flexible manner, and translucent concrete with different shapes can be produced using moulds with different cross-section shapes. Automated continuous production of the optical fiber bars can be realized, and thus a manufacturing cost of the translucent concrete can be greatly reduced. The optical fiber bars can be transported and stored conveniently, and can be transported to a construction site and arranged in a suitable manner for in-situ formation of concrete.

### Brief Description of the Drawings

Fig. 1 schematically shows a production process of an optical fiber bar;
Fig. 2 schematically shows a procedure of removing extra cement slurry from an optical fiber and performing shape-forming;
Fig. 3 is a sectional view of an optical fiber bar;

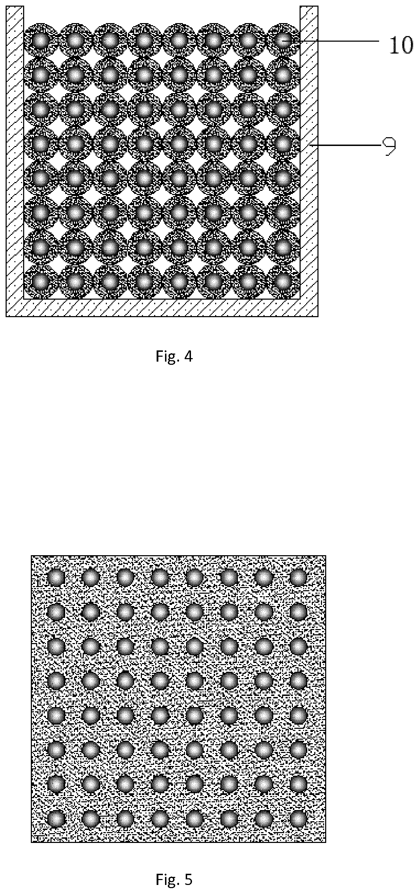

Fig. 4 is a sectional view of optical fiber bars that are put in a mould regularly; and
Fig. 5 is a sectional view of a translucent concrete.
   1- optical fiber coil;
   2- optical fiber;
   3- optical fiber guide wheel;
   4- cement slurry box;
   41- optical fiber to which cement slurry adheres;
   42- optical fiber bar after shape-forming;
   5- shape-forming funnel;
   6- fast maintenance area;
   7- drive wheel;
   8- scissor;
   9- mould; and
   10- optical fiber bar.

### Detailed Description of the Embodiments

The technical solutions of the present disclosure will be further illustrated hereinafter with reference to specific embodiments. However, the specific embodiments disclosed herein shall not be considered as a limitation to the scope of the present disclosure.

The present disclosure provides a method for manufacturing a translucent concrete based on optical fiber wrapped with cement slurry. The method will be illustrated below.

A cement flurry was prepared by mixing a cement, water, a thickner, and a quicksetting agent in a mass ratio of 1: 0.3-0.6: 0.0003-0.001: 0.005-0.02.

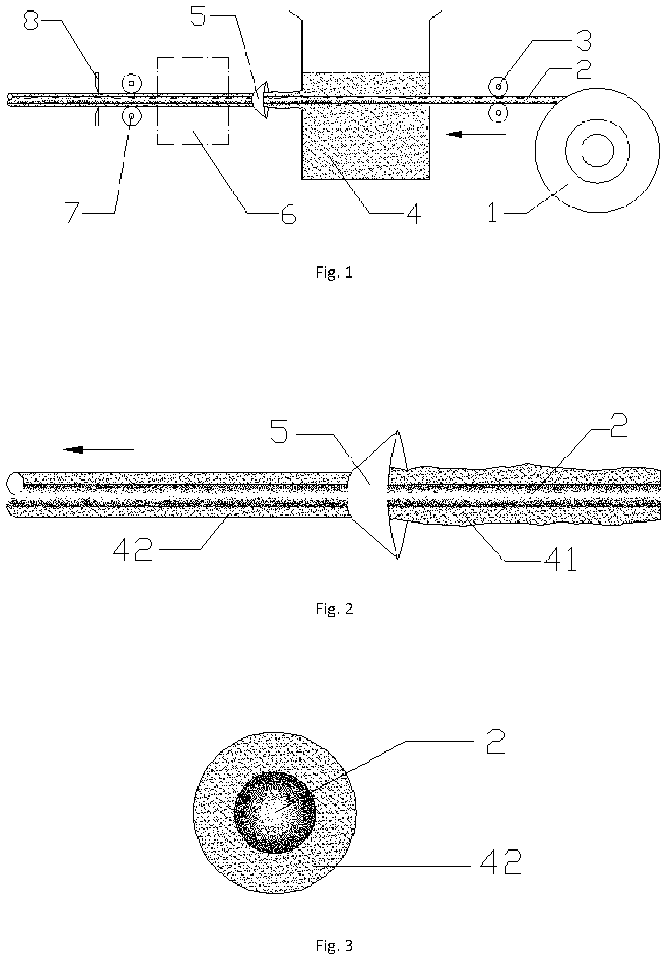

As shown in Figs. 1, 2, and 3, an optical fiber 2 is pulled out from an optical fiber coil 1 by an optical fiber guide wheel 3, and the straight optical fiber 2 passes through a cement slurry box 4 so that the cement slurry adheres to a surface of the optical fiber. A viscosity of the cement slurry is 45 cPa. A thickness of a cement slurry layer is about 0.8 mm, and the cement slurry does not drop from the optical fiber. The thickness of the cement slurry layer has an error about ±0.2mm due to gravity, optical fiber jitter and other factors.

The optical fiber 41 wrapped with the cement slurry passes through a shape-forming funnel 5 to obtain an optical fiber bar 42 after shape-forming. The cement slurry which adheres to the surface of the optical fiber is partly removed, and a uniform cement slurry layer with a thickness of 0.5 mm is retained after shape-forming. A minimum cross-sectional area of the shape-forming funnel is slightly larger than a cross-sectional area of a finished product of the optical fiber, and is slightly smaller than a cross-sectional area of the optical fiber wrapped with the cement slurry. In this manner, after the optical fiber wrapped with the cement slurry passes through the shape-forming funnel, the cement slurry wrapping the optical fiber has a uniform thickness, and the optical fiber bar has a constant cross-sectional area.

A temperature of a fast maintenance area 6 is in a range from 60°C to 80°C, and a humidity thereof is in a range from 80% to 90%. The optical fiber bar 42 is hardened in the fast maintenance area 6, is then guided out by a drive wheel 7, and is finally cut by a scissor 8 into optical fiber bars each with a length of 120 mm.

Two ends of the optical fiber bars are aligned, and the optical fiber bars are put closely and regularly into a wood mould with a size of 1000 mm × 800 mm × 123 mm. At this time, a distance between two adjacent optical fibers is 1 mm.

A cement slurry is poured into interspaces among the optical fiber bars along a direction of the optical fiber bars. Alternatively, some cement slurry before initial hardening can be poured into the wood mould first, and then the optical fiber bars are put closely and regularly into the wood mould. The cement slurry used herein has same components as the cement slurry wrapping the optical fiber bars. A width of an internal space of the mould is slightly larger than a length of the optical fiber bars, and thus the optical fiber bars can be put into the mould conveniently.

After the cement slurry hardens, two ends of the concrete along the direction of the optical fiber bars are polished, so that two ends of each optical fiber bar are exposed, and the translucent concrete is obtained.

During production, the thickness of the cement slurry layer wrapping the optical fiber can be adjusted through adjusting the viscosity of the cement slurry or adjusting the minimum cross-sectional area of the shape-forming funnel, so that different distances can be formed among the optical fibers. When the optical fiber bars are arranged next to one another, a distance between two adjacent optical fiber bars is twice the thickness of the cement slurry layer. The optical fiber bars can be put closely and regularly in a mould with any cross-sectional shapes. It can be seen that, according to the method of the present disclosure, translucent concrete with various sizes and shapes, and with various distances among optical fibers thereof can be produced rapidly and conveniently.

The protection scope of the present disclosure is not limited by the above embodiments, and all technical solutions which are essentially the same as those disclosed herein fall into the protection scope of the present disclosure as defined by the appended claims.

## Claims

1. A method for manufacturing a translucent concrete based on optical fiber (2) wrapped with cement slurry, comprising steps of:
step (1): wrapping an optical fiber (2) with a cement slurry, which comprises passing a straight optical fiber through the cement slurry so that the cement slurry adheres to a surface of the optical fiber;
step (2): removing extra cement slurry and performing shape-forming, which comprises passing the optical fiber (41) wrapped with the cement slurry through a shape-forming funnel (5) to remove extra cement slurry, and then sending the optical fiber (42) to a fast maintenance area (6);
step (3): cutting optical fiber bars, which comprises cutting the optical fiber (42) into a plurality of optical fiber bars (10) with an equal length after the cement slurry wrapping the optical fiber hardens;
step (4): arranging the optical fiber bars (10), which comprises aligning two ends of the optical fiber bars, and bundling the optical fiber bars up or putting the optical fiber bars regularly and closely in a mould (9);
step (5): pouring translucent concrete, which comprises pouring a cement slurry into interspaces among the optical fiber bars (10); and
step (6): polishing the concrete, which comprises polishing two ends of the concrete along a direction of the optical fiber bars (10) after the cement slurry hardens, so that two ends of each optical fiber bar are exposed, and the translucent concrete is obtained.

2. The method according to claim 1, wherein a viscosity of the cement slurry is in a range from 10 cPa to 60 cPa.

3. The method according to claim 1, wherein the optical fiber (2) is made of glass or resin.

4. The method according to claim 1, wherein a temperature of the fast maintenance area (6) is in a range from 60°C to 80°C, and a humidity thereof is in a range from 80% to 90%.

5. The method according to claim 1, wherein the cement slurry used in step (5) has same components as the cement slurry used in step (1), wherein the cement slurry comprises a cement, water, a thickener, and a quicksetting agent in a mass ratio of 1: 0.3-0.6: 0.0003-0.001: 0.005-0.02.

## Patentansprüche

1. Verfahren zur Herstellung von lichtdurchlässigem Beton auf Basis von einer optischen Faser, die mit einer Zementschlacke umwickelt wird, umfassend die Schritte:
Schritt (1): Umwickeln einer optischen Faser (2) mit einer Zementschlacke, umfassend das Durchführen einer geraden optischen Faser durch die Zementschlacke, so dass die Zementschlecke an einer Oberfläche der optischen Faser anhaftet;
Schritt (2): Entfernen von überschüssiger Zementschlacke und Durchführen einer Formung, umfassend das Durchführen der optischen Faser (41) mit der umwickelten Zementschlacke durch einen formgebenden Trichter (5), um überschüssige Zementschlacke zu entfernen, und dann Verbringen der optischen Faser (42) in einen Schnellwartungsbereich (6);
Schritt (3): Ablängen von optischen Faserstangen, umfassend das Ablängen der optischen Faser (42) in eine Vielzahl von optischen Faserstangen (10) mit einer gleich Länge, nachdem die die optische Faser umgebende Zementschlacke härtet;
Schritt (4): Anordnen der optischen Faserstangen (10), umfassend das Ausrichten von zwei Enden der optischen Faserstangen, und das Bündeln der optischen Faserstangen und Verbringen der optischen Faserstangen gleichmäßig und nahe aneinander in eine Gussform (9);
Schritt (5): Einleiten von lichtdurchlässigem Beton, umfassend das Einleiten einer Zementschlacke in Zwischenräume unter den optischen Faserstangen (10); und
Schritt (6): Polieren des Betons, umfassend das Polieren von zwei Enden des Bentos entlang einer Richtung der optischen Faserstangen (10), nachdem die Zementschlacke härtet, so dass zwei Enden jeder optischen Faserstange freiliegen, und der lichtdurchlässige Beton erhalten wird.

2. Verfahren nach Anspruch 1, wobei eine Viskosität der Zementschlacke in einem Bereich von 10 cPa bis 60 cPa liegt.

3. Verfahren nach Anspruch 1, wobei die optische Faser (2) aus Glas oder Harz gefertigt ist.

4. Verfahren nach Anspruch 1, wobei eine Temperatur des Schnellwartungsbereichs (6) in einem Bereich von 60°C bis 80 °C liegt, und eine Luftfeuchte dieses Bereichs in einem Bereich von 80 bis 90 % liegt.

5. Verfahren nach Anspruch 1, wobei die in Schritt (5) verwendete Zementschlacke die gleichen Komponenten wie die in Schritt (1) verwendete Zementschlacke enthält, wobei die Zementschlacke Zement, Wasser, Dickungsmittel, und ein Schnellbindemittel in einem Massenverhältnis von 1: 0,3-0,6 : 0,0003-0,001 : 0,005 - 0,02 aufweist.

## Revendications

1. Procédé de fabrication d'un béton translucide basé sur une fibre optique (2) enveloppée avec un coulis de ciment, comprenant les étapes consistant à :
étape (1) : envelopper une fibre optique (2) avec un coulis de ciment, qui comprend le fait de faire passer une fibre optique droite à travers le coulis de ciment de sorte que le coulis de ciment adhère à une surface de la fibre optique ;
étape (2) : retirer l'excédent de coulis de ciment et effectuer une mise en forme, qui comprend le fait de faire passer la fibre optique (41) enveloppée avec le coulis de ciment à travers un entonnoir de mise en forme (5) afin de retirer l'excédent de coulis de ciment, puis renvoyer la fibre optique (42) à une zone d'entretien rapide (6) ;
étape (3) : découper des barres de fibre optique, qui comprend le fait de découper la fibre optique (42) en une pluralité de barres de fibre optique (10) ayant une longueur égale après que le coulis de ciment enveloppant la fibre optique a durci ;
étape (4) : agencer les barres de fibre optique (10), qui comprend le fait d'aligner deux extrémités des barres de fibre optique, et le fait de regrouper les barres de fibre optique ou de placer les barres de fibre optique de manière régulière et rapprochée dans un moule (9) ;
étape (5) : couler du béton translucide, qui comprend le fait de couler un coulis de ciment dans les interstices entre les barres de fibre optique (10) ; et
étape (6) : polir le béton, qui comprend le fait de polir deux extrémités du béton le long d'une direction des barres de fibre optique (10) après que le coulis de ciment a durci, de sorte que deux extrémités de chaque barre de fibre optique sont exposées, et le béton translucide est obtenu.

2. Procédé selon la revendication 1, dans lequel une viscosité du coulis de ciment est comprise dans une plage allant de 10 cPa à 60 cPa.

3. Procédé selon la revendication 1, dans lequel la fibre optique (2) est faite de verre ou de résine.

4. Procédé selon la revendication 1, dans lequel une température de la zone d'entretien rapide (6) est comprise dans une plage allant de 60 °C à 80 °C, et une humidité de celle-ci est comprise dans une plage allant de 80 % à 90 %.

5. Procédé selon la revendication 1, dans lequel le coulis de ciment utilisé dans l'étape (5) a les mêmes composants que le coulis de ciment utilisé dans l'étape (1), dans lequel le coulis de ciment comprend un ciment, de l'eau, un épaississant, et un agent de durcissement rapide selon un rapport en masse de 1:0,3-0,6:0,0003-0,001:0,005-0,02.
